# EUROPÄISCHE PATENTSCHRIFT

(11) **EP 1 619 149 B1**
(45) Veröffentlichungstag und Bekanntmachung des Hinweises auf die Patenterteilung: **13.05.2009**
(21) Anmeldenummer: 04017422.9
(22) Anmeldetag: 23.07.2004
(51) Int. Cl.: B65G 67/02, B65G 69/28

(54) **Verfahren zum Verladen eines Objektes auf ein Transportmittel**
Method for loading an object on a transport means
Procédé de chargement d'un objet sur un moyen de transport

(43) Veröffentlichungstag der Anmeldung: 25.01.2006
(73) Patentinhaber: Christophel, Rüdiger, 23569 Lübeck (DE)
(72) Erfinder: Christophel, Rüdiger, 23569 Lübeck (DE)
(74) Vertreter: Hemmer, Arnd

(56) Entgegenhaltungen:
- FR-A- 2 401 090
- FR-A- 2 409 952
- GB-A- 1 404 041
- GB-A- 2 329 631
- US-A- 3 985 254

## Beschreibung

Die Erfindung betrifft ein Verfahren zum Verladen eines auf einer Stellfläche abgestellten Objektes auf die Ladefläche eines Transportmittels sowie ein für die Durchführung eines solchen Verfahrens ausgebildetes Objekt.

Das Verladen von schweren und beispielsweise auf einem Freigelände abgestellten Maschinen, maschinellen Anlagen, Containern und dergleichen kann mit Hilfe eines Kranes erfolgen, der das Objekt an Seilen hängend anhebt, über die Ladefläche eines Transportfahrzeuges verfährt und dann auf der Ladefläche absetzt. Allerdings stehen solche Kräne für mehrere Tonnen wiegende Lasten nur selten am Verladeort oder dem Betreiber des zu verladenden Objektes zur Verfügung. Sie müssen deshalb meistens angemietet werden, was einen hohen Aufwand an Kosten und Koordination im Zusammenhang mit einer terminlich passenden Bereitstellung des Kranes mit sich bringt, so dass häufig auch noch Kosten verursachende Wartezeiten anfallen.

Eine andere Verlademöglichkeit ergibt sich, wenn ein mit einem Schwenkarm und einer Winde ausgestattetes Fahrzeug, auch Hakenfahrzeug oder Containerwagen genannt, zur Verfügung steht, mit dem das beim Verladevorgang vorlaufende vordere Ende des Objektes auf den Haken der Winde genommen, gegebenenfalls angehoben und im Übrigen normalerweise über eine schräge Rampe komplett auf die Ladefläche des Transportmittels gezogen wird, wobei dieser Vorgang erleichtert wird, wenn das Objekt zumindest am hinteren, also beim Verladevorgang nachlaufenden Ende, mit Laufrollen ausgestattet ist und dann rollend auf die Ladefläche gezogen werden kann. Auch bei diesem relativ komplizierten Verladeverfahren gibt es die schon vorher beschriebenen Probleme, falls am Verladeort kein entsprechend ausgestattetes Fahrzeug zur Verfügung steht und erst herbeigeschafft werden muss.

Eine andere ebenfalls komplizierte Verlademöglichkeit ergibt sich, wenn das Objekt vorn und hinten mit jeweils zwei auf Abstand zueinander befindlichen Stützen in Form von hydraulischen Arbeitszylindern versehen ist. Diese können aus einer Ruheposition heraus üblicherweise zunächst seitlich ausgeschwenkt oder anderweitig seitlich nach außen verstellt und dann nach unten durch Ausfahren in eine Verladeposition aktiviert werden, wobei sie sich zunächst auf der Stellfläche abstützen und dann weiter das Objekt insgesamt so hoch anheben, dass beispielsweise ein Tieflader mit seiner Ladefläche komplett unter das Objekt gefahren werden kann. Im Anschluss daran werden die Arbeitszylinder wieder eingefahren, wobei das Objekt auf der Ladefläche abgesetzt wird. Schließlich werden die Arbeitszylinder zurück in ihre inaktive Ruheposition gestellt.

Diese Lösung ist konstruktiv und anwendungstechnisch relativ aufwändig, zumal ein gleichzeitig gleichmäßiges Ausfahren der Arbeitszylinder eine Steuerung und Überwachung der Bewegungsabläufe erforderlich macht. Im Übrigen ist dies auch eine störanfällige Lösung und weiterhin nur sinnvoll praktikabel, wenn das Objekt mit einer Hydraulikpumpe und z. B. einem Dieselmotor für den Antrieb der Pumpe ausgerüstet ist.

Aus FR 2 401 090 A zählt es Stand der Technik, ein Objekt in Form eines geschlossenen Behälters mit einer Kippeinrichtung auszustatten, die in ihrer Ruheposition neben dem Objekt, dieses umgebend auf der Ladefläche angeordnet ist und zum Zwecke des Entladen des Objektes auf eine Stellfläche mittels Hydraulikzylindern in eine aktive Arbeitsposition bewegbar ist, in der es über die Aufstandsebene des Objektes nach unten ragt um dieses gegenüber dem Boden abzustützen und anzuheben, sodass das darunter befindliche Fahrzeug entfernt werden kann. In dieser aktiven Arbeitsposition sorgt zudem eine Kippeinrichtung dafür, dass der Behälter mit seiner Auslassöffnung nach unten gerichtet ist. Die dort beschriebene Lösung ist technisch kompliziert und aufwendig und ist ausschließlich zur Aufnahme eines geschlossenen Schüttgutbehälters vorgesehen, für Objekte in Form von Maschinen, Containern und dergleichen ist diese sowohl aus räumlichen Gründen als auch wegen des komplizierten Aufbaus wenig geeignet.

Die Aufgabe der Erfindung besteht darin, ein Verfahren zum Verladen eines Objektes auf die Ladefläche eines Transportmittels vorzuschlagen, das mit einfachen Mitteln einen sicher und störungsfrei durchführbaren Verladevorgang gewährleistet. Außerdem soll ein insbesondere zur Durchführung eines solchen Verfahrens geeignet ausgestattetes Objekt vorgeschlagen werden.

Ein diese Aufgabe lösendes Verfahren ist erfindungsgemäß gekennzeichnet durch folgende Verfahrensschritte:
a. mindestens ein Ende des Objektes wird angehoben,
b. eine Kippeinrichtung wird zwecks Bildung eines Kipplagers in eine aktive Stellung gebracht, wonach sich das Objekt in einer ersten Kippstellung befindet oder in eine solche Kippstellung gebracht wird, bei der das vordere Ende des Objektes mit Abstand zur Stellfläche angeordnet ist,
c. ein Teilbereich der Ladefläche und das vordere Ende des Objektes werden in Überdeckung gebracht,
d. das vordere Ende des Objektes wird auf die Ladefläche abgesenkt,
e. die Kippeinrichtung wird deaktiviert, und
f. das Objekt wird weiter auf die Ladefläche bewegt und schließlich vollständig auf diese abgesenkt.

Bei diesem Verfahren kann zum einen so vorgegangen werden, dass das vordere Ende des Objektes angehoben und die Kippeinrichtung in die aktive Stellung gebracht wird, wonach sich dann das Objekt in der erwähnten ersten Kippstellung befindet, bei der das vordere Objektende mit Abstand zur Stellfläche angeordnet ist. Es schließen sich dann die vorgenannten Verfahrensschritte c. bis f. an.

Alternativ hierzu kann der Verladevorgang zum anderen auch so durchgeführt werden, dass die Kippeinrichtung nach Anheben des hinteren Endes des Objektes und Kippen des Objektes um sein auf der Stellfläche ruhendes vorderes Ende aktiviert wird, dass durch Absenken des hinteren Endes das Kipplager in Kontakt mit der Stellfläche gebracht wird und das vordere Ende unter weitergehendem Absenken des hinteren Endes des Objektes und Kippen des Objektes in die erste Kippstellung auf Abstand zur Stellfläche gebracht wird, dass das Transportmittel zumindest mit einem Teilbereich seiner Ladefläche unter das vordere Ende bewegt wird, dass dieses Ende durch Kippen des Objektes unter Anheben des hinteren Endes auf der Ladefläche abgestellt wird, dass nach weitergehendem Anheben des hinteren Endes das Kipplager außer Kontakt mit der Stellfläche gebracht und die Kippeinrichtung deaktiviert wird, dass das Objekt vollständig auf die Ladefläche bewegt wird und dass schließlich das hintere Ende durch Absenken auf der Ladefläche abgestellt wird. Hierbei müssen anders als beim vorher aufgezeigten Verladevorgang die Kräfte zum Kippen des Objektes ausschließlich nur an dessen hinterem Ende aufgebracht und eingeleitet werden.

Zweckmäßigerweise wird das Objekt mit Hilfe eines selbstfahrenden Hubgerätes angehoben, abgesenkt, in die jeweiligen Kippstellungen gebracht und auf die Ladefläche geschoben. Insofern sind besonders ein Kipper, Radlader oder Bagger mit einer heb- und senkbaren Schaufel oder auch ein Gabelstapler geeignet, der an einer statisch ausreichend stabilen Stelle am betreffenden Objektende angreift, beispielsweise an einem am Rahmen oder Chassis des Objektes angebrachten Beschlag, an dem die Kippkräfte aufgebracht und eingeleitet werden. Schließlich kann als Transportmittel ein Tieflader mit einer heckseitigen Ladeklappe Verwendung finden, die in ausgeklappter Position eine schräg nach oben zur Ladefläche führende Rampe bildet.

Das von einer Stellfläche aus auf die Ladefläche eines Transportmittels verladbare Objekt, welches insbesondere zur Durchführung des erfindungsgmäßen Verfahrens geeignet ist, bei dem am Objekt eine Kippeinrichtung mit einem Kipplager vorgesehen ist, das aus einer inaktiven Ruheposition in eine aktive Arbeitsposition bewegbar ist und in der Arbeitsposition über die Aufstandsebene des Objektes hinaus nach unten ragt, dadurch gekennzeichnet, daß unten am vorderen ende des Objekts Laufrollen vorgesehen sind, die in der aktiven Arbeitsposition auf der Aufstrondsebene stützen. Auf diese Weise ist die Möglichkeit gegeben, dass das Objekt bei in Arbeitsposition befindlicher Kippeinrichtung um deren sich auf der Stellfläche abstützendes Kipplager in der einen oder anderen Richtung nach Art einer Wippe gekippt bzw. verschwenkt werden kann. Weiterhin sind unten am vorderen Ende des Objektes Laufrollen vorgesehen.

Die Kippeinrichtung weist verstellbare Kippbeine auf, von denen jeweils eines im Bereich der beiden Längsseiten des Objektes vorgesehen ist, also beispielsweise zwei im gleichen Abstand zum vorderen oder hinteren Objektende befindliche Kippbeine, und zwar so, dass sie sich unterhalb des Massenschwenkpunktes des Objektes oder hierzu nach vorn oder hinten versetzt befinden. Letzteres hängt davon ab, ob sich das Objekt in der einen oder anderen möglichen Kippstellung im stabilen Gleichgewicht befinden soll.

Die Kippbeine können durch Verschwenken aus der Ruheposition in die Arbeitsposition und umgekehrt zurück in die Ruheposition gebracht und in diesen Positionen am Objekt arretiert werden. Eine andere Möglichkeit für das Verstellen der Kippbeine ergibt sich dadurch, das diese am Objekt linear geführt sind, aus der Ruheposition in die Arbeitsposition und umgekehrt zurück in die Ruheposition in Achsrichtung verstellt und in diesen Positionen arretiert werden können.

Die Kippeinrichtung ist zweckmäßigerweise lösbar an einem stabilen Chassis oder Rahmen des Objektes befestigt. Sie kann also bei Bedarf demontiert werden und gegen eine andere mit kürzeren oder längeren Kippbeinen ausgetauscht oder bei einem anderen Objekt zum Einsatz kommen. Es besteht natürlich auch die Möglichkeit, längenverstellbare, also beispielsweise teleskopierbare, Kippbeine einzusetzen und Objekte mit der erfindungsgemäßen Kippeinrichtung nachzurüsten.

Außerdem kann jeweils am freien Ende jedes Kippbeines ein Kippfuß vorgesehen werden, so dass die Kippfüße, wenn sie auf der Stellfläche stehen, das Kipplager für das Objekt bilden können.

Unten am hinteren Ende des Objektes sind vorteilhaft Kufen vorgesehen, mit denen sich das hintere abgesenkte Ende des Objektes auf der Stellfläche abstützen kann.

Die Laufrollen sind beispielsweise paarweise unten an Stützbeinen angebracht. Oberhalb dieser ersten Laufrollen können an den Stützbeinen weitere zweite Laufrollen vorgesehen sein. Die Stützbeine sind gemeinsam so verschwenkbar, dass die zweiten Laufrollen anstelle der ersten Laufrollen in Funktion gesetzt werden können, was den Vorteil bringt, dass der Abstand des vorderen Endes des in der ersten Kippstellung befindlichen Objektes bzw. der Abstand der dortigen Laufrollen zur Stellfläche vergleichsweise groß ist und ein relativ hoher Freiraum für das unter das vordere Ende zu bringende Transportmittel gegeben ist.

Das Verfahren und das Objekt nach der Erfindung werden nachfolgend anhand von in der Zeichnung schematisch dargestellten Ausführungsbeispielen weiter beschrieben. Es zeigen:
- Fig. 1 bis 7: den Ablauf eines Verladeverfahrens,
- Fig. 8: eine Seitenansicht eines mit Laufrollen ausgestatteten Stützbeines und
- Fig. 9: die Ansicht einer Kippeinrichtung in Längsrichtung zum hinteren Ende des Objektes gesehen.

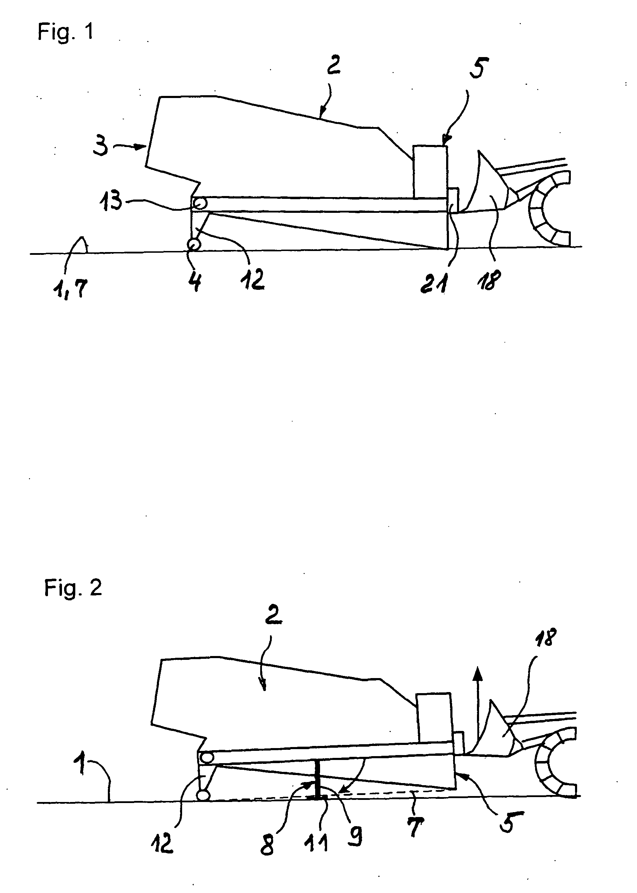

Ein gemäß Fig. 1 auf einer Stellfläche 1 abgestellte Objekt 2 ruht mit an seinem vorderen, beim Verladevorgang vorlaufenden Ende 3 vorgesehenen Laufrollen 4 und mit an seinem hinteren, beim Verladevorgang nachlaufenden Ende 5 vorgesehenen Kufen 6 auf der Stellfläche 1. Diese und die gedachte, in diesem Fall durch die Laufrollen 4 und die Kufen 6 bestimmte Aufstandsebene 7 des Objektes befinden sich hierbei in der gleichen Ebene.

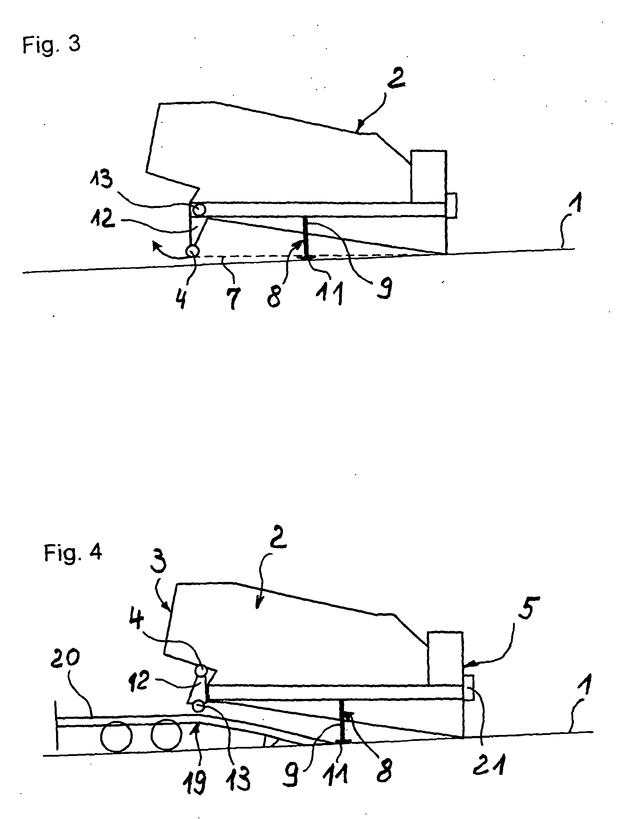

Im Schwerpunktbereich des Objektes oder auch hierzu nach vorn oder hinten versetzt befindet sich zwischen beiden Objektenden 3, 5 eine Kippeinrichtung 8, die aus einer inaktiven Ruheposition (Fig. 1) in eine aktive Arbeitsposition verstellt werden kann und in dieser Arbeitsposition über die Aufstandsebene 7 hinaus nach unten ragt (Fig. 2 und 3).

Die Kippeinrichtung hat verstellbare Kippbeine 9, von denen jeweils eines unten im Bereich der beiden Längsseiten des Objektes 2 angeordnet ist. Diese im gleichen Abstand zum einen oder anderen Objektende befindlichen Kippbeine 9 sind schwenkbar an einem stabilen Rahmen 15 oder Chassis 10 des Objektes gelagert und können aus einer inaktiven Ruheposition (Fig. 1) in einer Arbeitsposition (Fig. 2) verschwenkt und in beiden Positionen mechanisch arretiert werden. An dem freien Ende der Kippbeine 9 ist jeweils ein Kippfuß 11 angebracht. Die Kippfüße 11 befinden sich bei aktivierter Kippeinrichtung 8 unterhalb der erwähnten Aufstandsebene 7 des Objektes 2, wie es sich auch aus den Fig. 2 und 3 ergibt, und bilden das Kipplager.

Die Laufrollen 4 sind paarweise an dem nach den Fig. 1 und 2 unteren Ende jeweils eines Stützbeines 12 gelagert. Es werden mindestens zwei Laufrollen tragende Stützbeine mit Abstand zueinander unten am vorderen Objektende 3 in gleichem Abstand zum einen oder anderen Objektende vorgesehen.

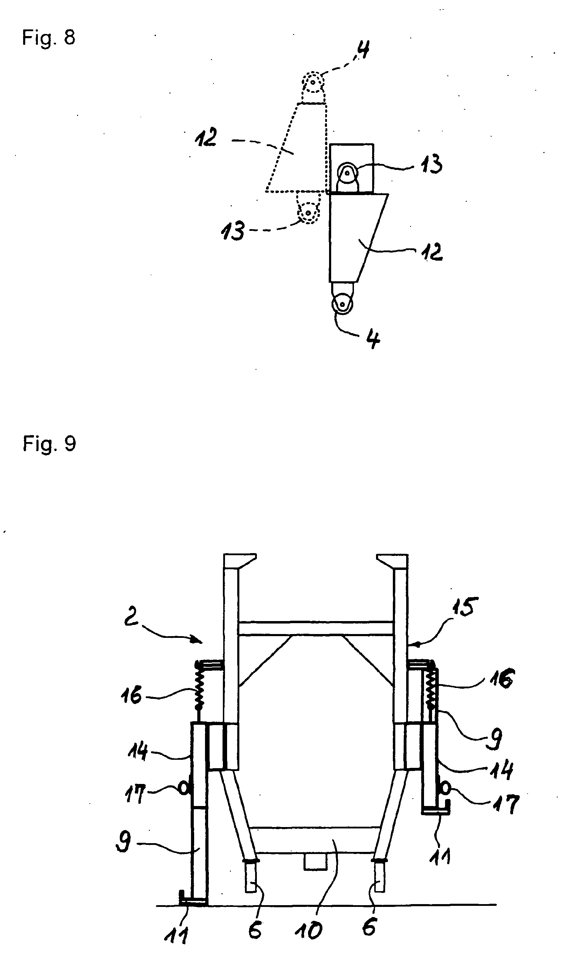

Wie auch die Fig. 8 zeigt, sind oberhalb der gemäß den Fig. 1 und 2 auf der Stellfläche 1 befindlichen ersten Laufrollen 4 weitere zweite Laufrollen 13 oben am gegenüberliegenden Endbereich der Stützbeine 12 gelagert. Die Stützbeine sind gemeinsam auf einer Achse befestigt und um etwa 180° so verschwenkbar (Fig. 3), dass die zweiten Laufrollen 13 anstelle der ersten Laufrollen 4 in Funktion gebracht werden (Fig. 4 bis 7). In der Fig. 8 ist diese Schwenkposition für ein Stützbein gestrichelt dargestellt.

Die Fig. 9 zeigt eine andere Ausführungsform für eine Kippeinrichtung 8, die ebenfalls zwei im Abstand zueinander angeordnete Kippbeine 9 und unten an den Kippbeinen angebrachte Kippfüße 11 aufweist. Allerdings sind in diesem Fall die Kippbeine 9 in Achsrichtung verstellbar geführt, und zwar beispielsweise in Rohrabschnitten 14, die an einem Rahmen 15 des Objektes 2 befestigt sind. Die Kippbeine sind jeweils an einer Feder 16 aufgehängt, die das Gewicht des zugehörigen Kippbeines 9 auffängt, was die von Hand vorzunehmende Verstellung der Kippbeine nach unten in die Arbeitsposition oder nach oben in die Ruheposition erleichtert. Mit Hilfe von Bolzen oder Riegeln 17, die von außen her durch in fluchtende Überdeckung zu bringende Bohrungen im Kippbein 9 und im Rohrabschnitt 14 gesteckt werden können, kann man die Kippbeine in ihrer jeweiligen Position arretieren. So ist das gemäß Fig. 9 linke Kippbein in der Arbeitsposition und das rechts befindliche Kippbein in der inaktiven Ruheposition festgesetzt. Eine weniger weite Verstellung der Kippbeine 9 in wenigstens eine andere Arbeitsposition sowie eine anschließende Arretierung in einer solchen Zwischenposition sind ebenfalls möglich.

Nachfolgend wird nun einer der erfindungsgemäß möglichen Verladevorgänge anhand der Fig. 1 bis 7 beschrieben. Die Ausgangsposition des Objektes 2 ergibt sich aus der Fig. 1. Ausgehend von dieser Position wird das hintere Ende 5 des Objektes 2 z. B. mit der an einem an diesem Ende vorgesehenen Beschlag 21 angreifenden Schaufel 18 eines selbstfahrenden Gerätes, beispielsweise eines Baggers oder Radladers, angehoben und das Objekt 2 um das mit den Laufrollen 4 auf der Stellfläche 1 befindliche vordere Ende 3 so weit gekippt, dass unterhalb des Objektes genug Freiraum für das Aktivieren der Kippeinrichtung 8 entsteht. Das Aktivieren erfolgt in diesem Fall durch Ausschwenken von Kippbeinen 9 in die Stellung nach Fig. 2, bei der die Kippfüße 11 und ein unterer Teil der Kippbeine über die Aufstandsebene 7 nach unten hinausragen.

Durch Absenken des hinteren Objektendes 5 gelangt die aktivierte Kippeinrichtung 8 mit ihren Kippfüßen 11 in Kontakt mit der Stellfläche 1, gelangen und das vordere Objektende 3 wird unter weitergehendem Absenken des hinteren Objektendes 5 um die das Kipplager bildenden Kippfüße 11 in die in Fig. 3 gezeigte Kippstellung gebracht, bei der sich das vordere Objektende 3 mit den Laufrollen 4 in freiem Abstand zur Stellfläche 1 befindet.

Grundsätzlich ist es nun schon möglich, einen hier als Transportmittel verwendeten Tieflader 19 mit seiner Ladefläche 20 unter das angehobene vordere Objektende 3 zu verfahren. Zweckmäßigerweise und aus bereits vorher dargelegten Gründen werden allerdings vorab die Stützbeine 12 aus ihrer Stellung nach Fig. 3 in die in Fig. 4 dargestellte Stellung verschwenkt und arretiert, um so anstelle der ersten in Funktion gewesenen Laufrollen 4 nunmehr die zweiten Laufrollen 13 in Funktionsbereitschaft zu bringen. Anschließend wird der Tieflader 19 mit einem Teil seiner Ladefläche 20 unter das vordere Ende 3 des Objektes 2 bewegt (Fig. 4).

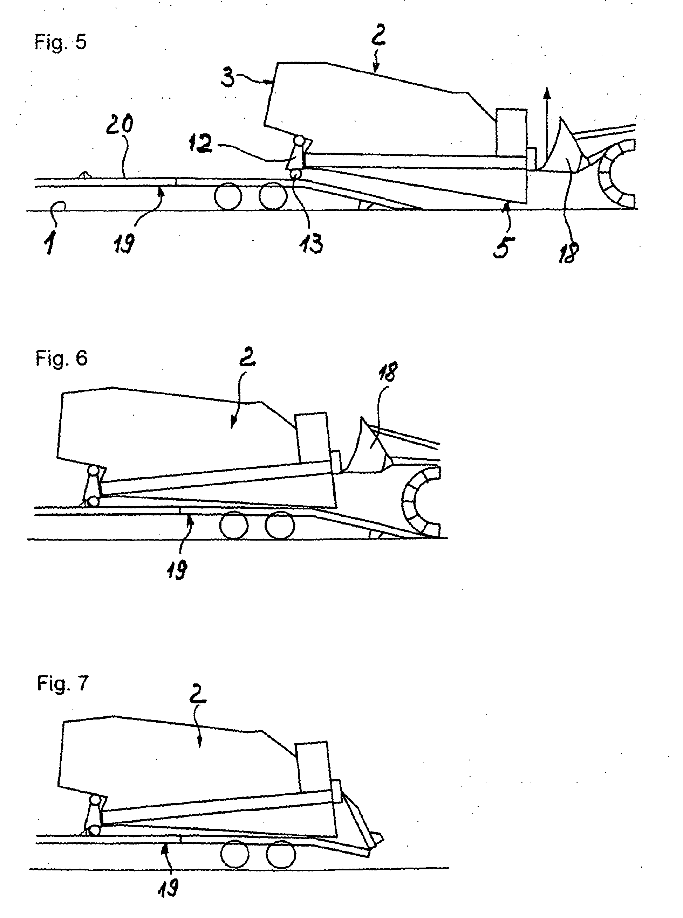

Durch Anheben des hinteren Objektendes 5 wird das noch auf den Kippbeinen 9 ruhende Objekt 2 gekippt, wobei zunächst das vordere Objektende 3 mit den Laufrollen 13 auf der Ladefläche 20 abgestellt wird. Durch weiteres Anheben des hinteren Endes 5 kommen die Kippbeine 9 bzw. deren Kippfüße 11 von der Stellfläche 1 frei, so dass die Kippeinrichtung nun durch Einschwenken der Kippbeine 9 in die Ruheposition deaktiviert werden kann und auch deaktiviert wird (Fig. 5).

Im Anschluss daran wird das Objekt 2 bei angehoben bleibendem und erforderlichenfalls noch weiter mit der Schaufel 18 angehobenem hinteren Ende 5 mit Hilfe des in Richtung Tieflader 19 fahrenden Baggers oder Radladers vollständig auf die Ladefläche 20 geschoben, und anschließend wird auch das hintere Objektende 5 durch Absenken auf der Ladefläche 20 abgestellt, womit der Verladevorgang als solcher beendet ist.

Es ist klar, dass mit der Kippeinrichtung nach Fig. 9 in entsprechender Weise vorgegangen wird, da nur anders als bei der vorher beschriebenen Kippeinrichtung die Kippbeine nicht schwenkbar gelagert, sondern axial verstellbar gelagert sind. Im Übrigen können unabhängig von der Art der Kippeinrichtung die Kippbeine in Bezug auf ihre in der Arbeitsposition wirksame und gewünschte Länge eingestellt werden, um so die maximal möglichen Kippwinkel des Objektes festzulegen.

## Patentansprüche

1. Verfahren zum Verladen eines auf einer Stellfläche (1) abgestellten Objektes (2) auf die Ladefläche (20) eines Transportmittels (19), **gekennzeichnet durch** folgende Verfahrensschritte:
a. mindestens ein Ende des Objektes (2) wird angehoben,
b. eine Kippeinrichtung (8) wird zwecks Bildung eines Kipplagers in eine aktive Stellung gebracht, wonach sich das Objekt (2) in einer ersten Kippstellung befindet oder in eine solche Kippstellung gebracht wird, bei der das vordere Ende(3) des Objektes (2) mit Abstand zur Stellfläche (1) angeordnet ist,
c. ein Teilbereich der Ladefläche (20) und das vordere Ende (3) des Objektes (2) werden in Überdeckung gebracht,
d. das vordere Ende (3) des Objektes (2) wird auf die Ladefläche (20) abgesenkt,
e. die Kippeinrichtung (8) wird deaktiviert, und
f. das Objekt (2) wird weiter auf die Ladefläche (20) bewegt und schließlich vollständig auf diese abgesenkt.

2. Verfahren nach Anspruch 1, **dadurch gekennzeichnet, dass** die Kippeinrichtung (8) nach Anheben des hinteren Endes (5) des Objektes (2) und Kippen des Objektes (2) um sein auf der Stellfläche (1) ruhendes vorderes Ende (3) aktiviert wird, dass durch Absenken des hinteren Endes (5) das Kipplager (11) in Kontakt mit der Stellfläche(1) gebracht wird und das vordere Ende (3) unter weitergehendem Absenken des hinteren Endes (5) des Objektes (2)und Kippen des Objektes (2) in die erste Kippstellung auf Abstand zur Stellfläche (1) gebracht wird, dass das Transportmittel (19) zumindest mit einem Teilbereich seiner Ladefläche (20) unter das vordere Ende (3) bewegt wird, dass dieses Ende durch Kippen des Objektes (2) unter Anheben des hinteren Endes (5) auf der Ladefläche (20) abgestellt wird, dass nach weitergehendem Anheben des hinteren Endes (5) das Kipplager (11) außer Kontakt mit der Stellfläche (1) gebracht und die Kippeinrichtung (8) deaktiviert wird, dass das Objekt (2) vollständig auf die Ladefläche (20) bewegt wird und dass schließlich das hintere Ende (5) durch Absenken auf der Ladefläche(20) abgestellt wird.

3. Verfahren nach einem der Ansprüche 1 und 2, **dadurch gekennzeichnet, dass** das Objekt (2) mit Hilfe eines selbstfahrenden Hubgerätes, vorzugsweise eines Kippers, Radladers oder Gabelstaplers, in die jeweiligen Kippstellungen gebracht und auf die Ladefläche (20) geschoben wird.

4. Verfahren nach einem der Ansprüche 1 bis 3, **dadurch gekennzeichnet, dass** die Kräfte zum Kippen des Objektes (2) ausschließlich an dessen hinterem Ende (5) aufgebracht und eingeleitet werden.

5. Verfahren nach einem der Ansprüche 1 bis 4, **dadurch gekennzeichnet, dass** als Transportmittel (19) ein Tieflader verwendet wird.

6. Objekt (2), insbesondere zur Durchführung eines Verfahrens nach einem der Ansprüche 1 bis 5, bei dem am Objekt (2) eine Kippeinrichtung (8) mit einem Kipplager (11) vorgesehen ist, das aus einer inaktiven Ruheposition in eine aktive Arbeitsposition bewegbar ist und in der Arbeitsposition über die Aufstandsebene (7) des Objektes (2) hinaus nach unten ragt, **dadurch gekennzeichnet, dass** unten am vorderen Ende (3) des Objekts (2) Laufrollen (4) vorgesehen sind, die in der aktiven Arbeitsposition auf der Stellfläche (1) stützen.

7. Objekt nach Anspruch 6, **dadurch gekennzeichnet, dass** die Kippeinrichtung (8) verstellbare Kippbeine (9) aufweist, von denen jeweils eines im Bereich der beiden Längsseiten des Objektes (2) vorgesehen ist.

8. Objekt nach Anspruch 7, **dadurch gekennzeichnet, dass** die Kippbeine (9) verschwenkbar am Objekt (2) gelagert sind und durch Verschwenken aus der Ruheposition in die Arbeitsposition aktivierbar und umgekehrt zurück in die Ruheposition deaktivier bar sind und in diesen Positionen arretierbar sind.

9. Objekt nach Anspruch 7, **dadurch gekennzeichnet, dass** die Kippbeine (9) am Objekt (2) geführt sind und aus der Ruheposition in die Arbeitsposition und umgekehrt zurück in die Ruheposition in Achsrichtung verstellbar und in diesen Positionen arretierbar sind.

10. Objekt nach einem der Ansprüche 6 bis 9, **dadurch gekennzeichnet, dass** die Kippeinrichtung (8) lösbar an einem Rahmen (15) des Objektes (2) befestigt ist.

11. Objekt nach einem der Ansprüche 7 bis 9, **dadurch gekennzeichnet, dass** am freien Ende jedes Kippbeines (9) ein Kippfuß (11) vorgesehen ist und dass die Kippfüße (11) das Kipplager bilden.

12. Objekt nach einem der Ansprüche 6 bis 11, **dadurch gekennzeichnet, dass** die Laufrollen (4) an Stützbeinen (12) angebracht sind.

13. Objekt nach Anspruch 12, **dadurch gekennzeichnet, dass** oberhalb der erwähnten ersten Laufrollen (4) weitere zweite Laufrollen (13) an den Stützbeinen (12) vorgesehen sind und dass die Stützbeine (12) gemeinsam so verschwenkbar sind, dass die zweiten Laufrollen (13) anstelle der ersten Laufrollen (4) in Funktion setzbar sind.

14. Objekt nach einem der Ansprüche 6 bis 13, **dadurch gekennzeichnet, dass** unten am hinteren Ende (5) des Objektes (2) Kufen (6) vorgesehen sind.

15. Objekt nach einem der Ansprüche 6 bis 14, **dadurch gekennzeichnet, dass** an einem Ende (5) des Objektes (2) ein Beschlag (21) vorgesehen ist, an dem die Kräfte zum Kippen und Bewegen des Objektes (2) aufbringbar sind.

## Claims

1. A method for transporting an object (2) placed on a surface (1) onto the load floor (20) of a transport means (19), **characterised by** the following method steps:
a. at least one end of the object (2) is lifted,
b. a tilt device (8) is brought into an active position for the purpose of forming a tilt support, whereupon the object (2) is located in a first tilt position or is brought into such a tilt position, with which the front end (3) of the object (2) is arranged at a distance to the surface (1),
c. a part region of the load floor (20) and the front end (3) of the object (2) are brought to overlap,
d. the front end (3) of the object (2) is lowered onto the load floor (20),
e. the tilt device (8) is deactivated, and
f. the object (2) is moved further onto the load floor (20) and finally completely lowered onto this.

2. A method according to claim 1, **characterised in that** the tilt device (8) is activated after lifting the lower end (5) of the object (2) and tilting the object (2) about its front end (3) resting on the surface (1), that by way of lowering the rear end (5), the tilt support (11) is brought into contact with the surface (1), and the front end (3) amid the continued lowering of the rear end (5) of the object (2) and the tilting of the object is brought into a first tilt position at a distance to the surface, that the transport means (19) at least with a part region of its load floor (20) is moved below the front end (3), that this end is placed on the load floor (20) by way of tilting the object (2) whilst lifting the rear end (5), that after a continued lifting of the lower end (5), the tilt support (11) is brought out of contact with the surface (1) and the tilt device (8) is deactivated, that the object (2) is completely moved onto the load floor (20) and that finally the rear end (5) is placed on the load floor (20) by way of lowering.

3. A method according to one of the claims 1 and 2, **characterised in that** the object (2) is brought into the respective tilt positions with the help of an automotive lift apparatus, preferably a tipper, wheel-loader or fork-lift, and pushed onto the load floor (20).

4. A method according to one of the claims 1 to 3, **characterised in that** the forces for tilting the object (2) are exerted and introduced exclusively at its rear end (5).

5. A method according to one of the claims 1 to 4, **characterised in that** a low loader is used as a transport means (19).

6. An object (2), in particular for carrying out a method according to one of the claims 1 to 5, with which a tilt device (8) with a tilt support (11) is provided on the object (2), said tilt support being movable from an inactive rest position into an active working position, and in the working position projects downwards beyond the contact plane (7) of the object (2), **characterised in that** runner rollers (4) are provided at the bottom at the front end (3) of the object (2), said runners being supported on the surface (1) in the active working position.

7. An object according to claim 6, **characterised in that** the tilt device (8) comprises adjustable tilt legs (9) of which in each case one is provided in the region of the two longitudinal sides of the object (2).

8. An object according to claim 7, **characterised in that** the tilt legs (9) are pivotably mounted on the object (2) and may be activated by way of pivoting out of the idle position into the working position and vice versa may be deactivated back into the idle position, and may be locked in these positions.

9. An object according to claim 7, **characterised in that** the tilt legs (9) are guided on the object and are adjustable in the axis direction out of the idle position into the working position and vice versa back into the idle position and may be locked in these positions.

10. An object according to one of the claims 6 to 9, **characterised in that** the tilt device (8) is releasably fastened on a frame (15) of the object (2).

11. An object according to one of the preceding claims 7 to 9, **characterised in that** a tilt foot (11) is provided on the free end of each tilt leg (9), and that the tilt feet (11) form the tilt support.

12. An object according to one of the claims 6 to 11, **characterised in that** the runner rollers (14) are attached on support legs (12).

13. An object according to claim 12, **characterised in that** further second runner rollers (13) are provided above the mentioned first runner rollers (4) on support legs (12), and that the support legs (12) together may be pivoted such that the second runner rollers (13) may be set into function instead of the first runner rollers (4).

14. An object according to one of the claims 6 to 13, **characterised in that** skids (6) are provided at the bottom on the rear end (5) of the object (2).

15. An object according to one of the claims 6 to 14, **characterised in that** a mounting (21) is provided on one end (5) of the object (2), on which the forces for tilting and moving the object (2) may be applied.

## Revendications

1. Procédé pour charger un objet (2), déposé sur une surface au sol (1), sur la surface de chargement (20) d'un moyen de transport (19), **caractérisé par** les étapes de procédé suivantes :
a. une extrémité, au moins, de l'objet (2) est soulevée,
b. un dispositif de pivotement (8) est, en vue de la formation d'un appui de pivotement, placé dans une position active, selon laquelle l'objet (2) se trouve dans une première position de pivotement ou est amené dans une telle position de pivotement, dans laquelle l'extrémité avant (3) de l'objet (2) est située à distance de la surface au sol (1),
c. une zone partielle de la surface de chargement (20) et l'extrémité avant (3) de l'objet (2) sont placées en chevauchement,
d. l'extrémité avant (3) de l'objet (2) est abaissée sur la surface de chargement (20),
e. le dispositif de pivotement (8) est rendu inactif, et
f. l'objet (2) est avancé sur la surface de chargement (20) et finalement abaissé complètement sur cette dernière.

2. Procédé selon la revendication 1, **caractérisé en ce que** le dispositif de pivotement (8), après soulèvement de l'extrémité arrière (5) de l'objet (2) et pivotement de l'objet (2) autour de son extrémité avant (3) reposant sur la surface au sol (1), est rendu actif, **en ce que** par abaissement de l'extrémité arrière (5), l'appui de pivotement (11) est amené en contact avec la surface au sol (11) et l'extrémité avant (3), moyennant la poursuite de l'abaissement de l'extrémité arrière (5) de l'objet (2) et le pivotement de l'objet (2) jusque dans la première position de pivotement, est placée à distance de la surface au sol (1), **en ce que** le moyen de transport (19) est, au moins avec une zone partielle de sa surface de chargement (20), déplacé sous l'extrémité avant (3), **en ce que** cette extrémité est déposée sur la surface de chargement (20) par pivotement de l'objet (2) moyennant le soulèvement de l'extrémité arrière (5), **en ce qu'**après poursuite du soulèvement de l'extrémité arrière (5), l'appui de pivotement (11) est mis hors de contact avec la surface au sol (1) et le dispositif de pivotement (8) est rendu inactif, **en ce que** l'objet (2) est déplacé complètement sur la surface de chargement (20) et **en ce que** finalement, l'extrémité arrière (5) est, par abaissement, déposée sur la surface de chargement (20).

3. Procédé selon l'une des revendications 1 et 2, **caractérisé en ce que** l'objet (2) est amené dans les positions de pivotement respectives et poussé sur la surface de chargement (20) à l'aide d'un engin élévateur automoteur, de préférence d'un camion à benne basculante, d'un chargeur à roues ou d'un chariot élévateur à fourches.

4. Procédé selon l'une des revendications 1 à 3, **caractérisé en ce que** les forces permettant de faire pivoter l'objet (2) sont appliquées et transmises uniquement à l'extrémité arrière (5) de ce dernier.

5. Procédé selon l'une des revendications 1 à 4, **caractérisé en ce qu'**un camion surbaissé est employé comme moyen de transport (19).

6. Objet (2), notamment pour la mise en oeuvre d'un procédé selon l'une des revendications 1 à 5, dans le cas duquel il est prévu sur l'objet (2), un dispositif de pivotement (8) muni d'un appui de pivotement (11), qui est déplaçable d'une position de repos inactive dans une position de travail active et qui, dans la position de travail, fait saillie vers le bas au-delà du plan de contact (7) de l'objet (2), **caractérisé en ce qu'**à l'extrémité avant (3) de l'objet (2) et au bas de celle-ci, sont prévues des roulettes (4) qui, dans la position de travail active, portent sur la surface au sol (1).

7. Objet selon la revendication 6, **caractérisé en ce que** le dispositif de pivotement (8) comprend des béquilles de pivotement (9) ajustables, dont chacune est prévue dans la région des deux côtés longitudinaux de l'objet (2).

8. Objet selon la revendication 7, **caractérisé en ce que** les béquilles de pivotement (9) sont montées pivotantes sur l'objet (2) et peuvent être rendues actives par déplacement pivotant, de la position de repos dans la position de travail, et inactives par retour en sens inverse dans la position de repos, et peuvent être bloquées dans ces positions.

9. Objet selon la revendication 7, **caractérisé en ce que** les béquilles de pivotement (9) sont guidées sur l'objet (2) et peuvent être ajustées par déplacement, dans la direction de leur axe, de la position de repos dans la position de travail et retour, en sens inverse, dans la position de repos, et bloquées dans ces positions.

10. Objet selon l'une des revendications 6 à 9, **caractérisé en ce que** le dispositif de pivotement (8) est fixé, de façon démontable, à un cadre (15) de l'objet (2).

11. Objet selon l'une des revendications 7 à 9, **caractérisé en ce qu'**un pied de pivotement (11) est prévu à l'extrémité libre de chaque béquille de pivotement (9) et **en ce que** les pieds de pivotement (11) forment l'appui de pivotement.

12. Objet selon l'une des revendications 6 à 11, **caractérisé en ce que** les roulettes (4) sont rapportées sur des béquilles de support (12).

13. Objet selon la revendication 12, **caractérisé en ce qu'**au-dessus des premières roulettes (4) mentionnées, sont prévues sur les béquilles de support (12), des secondes roulettes (13) supplémentaires, et **en ce que** les béquilles de support (12) peuvent être déplacées conjointement par pivotement de telle façon que les secondes roulettes (13) puissent être mises en fonction à la place des premières roulettes (4).

14. Objet selon l'une des revendications 6 à 13, **caractérisé en ce qu'**à l'extrémité arrière (5) de l'objet (2) et au bas de celle-ci, sont prévus des patins (6).

15. Objet selon l'une des revendications 6 à 14, **caractérisé en ce qu'**à une extrémité (5) de l'objet (2) est prévue une armature (21), sur laquelle peuvent être appliquées les forces permettant de faire pivoter et déplacer l'objet (2).
